# EUROPÄISCHE PATENTSCHRIFT

(11) **EP 2 539 688 B1**
(45) Veröffentlichungstag und Bekanntmachung des Hinweises auf die Patenterteilung: **28.12.2016**
(21) Anmeldenummer: 11701769.9
(22) Anmeldetag: 03.01.2011
(51) Int. Cl.: G01N 21/27, G01N 21/47, G01N 21/51, G01N 21/53

(54) **VERFAHREN UND VORRICHTUNG ZUR BESTIMMUNG DER QUALITÄT DER MESSERGEBNISSE EINES STREULICHTMESSGERÄTES**
METHOD AND DEVICE FOR DETERMINING THE QUALITY OF THE MEASUREMENT RESULTS OF A SCATTERED LIGHT METER
PROCÉDÉ ET DISPOSITIF POUR DÉTERMINER LA QUALITÉ DES RÉSULTATS DE MESURE D'UN APPAREIL DE MESURE DE LUMIÈRE DIFFUSÉE

(30) Priorität: 26.02.2010 DE 102010002420
(43) Veröffentlichungstag der Anmeldung: 02.01.2013
(73) Patentinhaber: Robert Bosch GmbH, 70442 Stuttgart (DE)
(72) Erfinder: STENGEL, Karl, 73779 Deizisau (DE); HAAGA, Gerhard, 73275 Ohmden (DE); NEUENDORF, Michael, 73207 Plochingen (DE); SIEG, Raymond, 73732 Esslingen (DE)
(86) Internationale Anmeldenummer: PCT/EP2011/050031
(87) Internationale Veröffentlichungsnummer: WO 2011/104039

(56) Entgegenhaltungen:
- JP-A- 10 239 237
- US-A- 3 976 891
- US-A- 5 467 187
- US-A1- 2009 075 248
- Casella Cel: "Microdust pro Aerosol Monitoring SystemWINDUST proApplication Software(HB3275-06)", Users Handbook , 1. September 2003 (2003-09-01), Seite 61PP, XP002635249, Gefunden im Internet: URL:http://www.bgiusa.com/iaq/microdust_hb _i6.pdf [gefunden am 2011-05-04]

## Beschreibung

### Stand der Technik

Die Erfindung betrifft Verfahren zur Bestimmung der Qualität der Messergebnisse eines Streulichtmessgerätes, wie es zur Messung von Partikelkonzentrationen in Kraftfahrzeugabgasen verwendet wird, und ein Streulichtmessgerät, das zur Durchführung eines erfindungsgemäßen Verfahrens ausgebildet ist.

Die Verwendung von Streulichtverfahren zur Messung der Konzentration von Partikeln in Abgasen und anderen Kolloiden ist im Stand der Technik bekannt.

Dabei wird üblicherweise eine in einer Messkammer angeordnete, lichtstarke Lichtquelle, wie z. B. ein Laser, eingesetzt und das zu messende Kolloid wird durch die Messkammer geleitet. In der Messkammer ist wenigstens ein Lichtsensor vorhanden, der Streulicht, das von im Kolloid vorhandenen Partikeln gestreut worden ist, detektiert. Auch wenn so genannte Spülluftvorhänge eingesetzt werden, um die Lichtausgangsflächen der Lichtquelle und die Lichteingangsflächen der Lichtsensoren, die mit den Abgasen in Berührung kommen, sauber von Ablagerungen zu halten, werden die Lichteingangs- und -ausgangsflächen im Laufe der Zeit durch Partikelablagerungen verschmutzt, die Intensität der von den Lichtsensoren ausgegebenen Signale nimmt ab und die Messergebnisse werden verfälscht. Eine Verfälschung der Messergebnisse kann auch durch eine Alterung von Bauelementen der Lichtquelle, der Lichtsensoren und/oder der Verstärker- und Auswertelektronik verursacht werden.

Es ist daher wichtig, Verschmutzungen und/oder eine Alterung der kritischen Bauelemente eines solchen Messgerätes zu erkennen, um die Genauigkeit und Validität der mit dem Messgerät gemessenen Daten beurteilen zu können.

Abgasmessgeräte, die für amtliche Messungen verwendet werden, fallen unter die Eichpflicht, wodurch sich die Notwendigkeit, eine hinreichende Genauigkeit der Messergebnisse sicherzustellen, noch weiter erhöht.

### Offenbarung der Erfindung

Es ist eine Aufgabe der Erfindung, die Qualität der Messergebnisse eines Streulichtmessgerätes zuverlässig und mit guter Genauigkeit zu bestimmen.

Diese Aufgabe wird durch ein erfindungsgemäßes Verfahren nach dem unabhängigen Patentanspruch 1 und ein erfindungsgemäßes Streulichtmessgerät nach dem Patentanspruch 10 gelöst. Die abhängigen Ansprüche beschreiben vorteilhafte Ausgestaltungen des erfindungsgemäßen Verfahrens.

Ein erfindungsgemäßes Verfahren zur Bestimmung Qualität der Messergebnisse eines Streulichtmessgerätes, das zur Messung einer Partikelkonzentration in Kraftfahrzeugabgasen vorgesehen ist und wenigstens eine Streulicht-Messkammer, wenigstens eine Lichtquelle und wenigstens einen Lichtsensor aufweist, schließt den Schritt ein, das Streulichtmessgerät zunächst in einem definierten Referenzzustand, in dem idealerweise keine Ablagerungen in der Streulicht-Messkammer vorhanden sind und sich die Bauelemente in einem neuwertigen Zustand befinden, zu betreiben (Initialisierung). Dieser Zustand ist beispielsweise unmittelbar nach der Herstellung des Streulichtmessgerätes bzw. nach dem Austausch oder der gründlichen Reinigung der relevanten Bauelemente, wie beispielsweise der Streulicht-Messkammer, gegeben.

Erfindungsgemäß wird das Streulichtmessgerät, das sich in einem beschriebenen Referenzzustand befindet, in einem ersten definierten Betriebszustand betrieben. In einer ersten Variante ist die Lichtquelle im ersten Betriebszustand ausgeschaltet. Alternativ ist die Lichtquelle im ersten Betriebszustand eingeschaltet und ein erster Referenzgasstrom mit einer ersten definierten Partikelkonzentration oder ein erster Messkörper mit definierten Streueigenschaften wird in die Streulicht-Messkammer eingebracht, um definiertes Streulicht zu erzeugen. Das Signal eines oder mehrerer Streulichtsensoren wird gemessen und als erstes Streulichtsensorsignal S1 gespeichert.

Danach wird das Streulichtmessgerät in einen zweiten definierten Betriebszustand gebracht, in dem die Lichtquelle eingeschaltet ist und ein zweiter Referenzgasstrom mit einer zweiten definierten Partikelkonzentration oder ein zweiter Messkörper mit definierten Streueigenschaften, die sich von den Streueigenschaften des ersten Messkörpers unterscheiden, wird in die Streulicht-Messkammer eingebracht, um definiertes Streulicht zu erzeugen, das sich von dem Streulicht im ersten Betriebszustand unterscheidet.

Auch im zweiten definierten Betriebszustand wird das Signal des Streulichtsensors bzw. der Streulichtsensoren gemessen und als zweites Streulichtsensorsignal S2 gespeichert.

Die Differenz zwischen dem zweiten Streulichtsensorsignal S2 und dem ersten Streulichtsensorsignal S1 ergibt eine Referenz-Signaldifferenz R = S2 - S1, die in einer geeigneten Speichervorrichtung zur späteren Verwendung gespeichert wird.

Die Initialisierung des erfindungsgemäßen Verfahrens ist damit abgeschlossen.

Zur Bestimmung Qualität der Messergebnisse eines Streulichtmessgeräts, das für eine gewisse Zeit und/oder eine gewisse Anzahl von Messvorgängen in Betrieb gewesen ist, werden die zuvor beschriebenen Schritte wiederholt:
Der erste, während der Initialisierung eingerichtete, definierte Betriebszustand, in dem die Lichtquelle ausgeschaltet ist oder in dem die Lichtquelle eingeschaltet ist und ein erster Referenzgasstrom mit einer ersten definierten Partikelkonzentration oder der erste Messkörper in die Streulicht-Messkammer eingebracht ist, wird wiederhergestellt und ein erstes Streulichtsensorsignal M1 des Streulichtsensors bzw. der Streulichtsensoren wird gemessen und gespeichert.

Danach wird der zweite, während der Initialisierung eingerichtete, definierte Betriebszustand, bei dem ein zweiter Referenzgasstrom, der eine zweite definierte Partikelkonzentration hat, oder der zweite Messkörper in die Streulicht-Messkammer eingebracht ist, eingestellt und ein zweites Streulichtsensorsignal M2 wird gemessen und gespeichert. Die Differenz D = M2 - M1 zwischen den in den beiden definierten Betriebszuständen gemessenen Streulichtsensorsignalen M2 und M1 wird berechnet und mit der in der Initialisierung bestimmten Referenz-Signaldifferenz R verglichen.

Die Abweichung der im gebrauchten bzw. gealterten Zustand des StreulichtMessgerätes ermittelten Signaldifferenz D von der Referenz-Signaldifferenz R ist ein zuverlässiges Maß für die Qualität der Messergebnisse des StreulichtMessgerätes.

Für die Abweichung der im gebrauchten bzw. gealterten Zustand des StreulichtMessgerätes ermittelten Signaldifferenz D von der Referenz-Signaldifferenz R kann ein Schwellwert definiert werden, bei dessen Überschreiten dem Benutzer eine Warnung angezeigt wird und/oder der weitere Betrieb des Streulichtmessgerätes verhindert wird, da die Genauigkeit der Ergebnisse nicht mehr den (gesetzlichen) Anforderungen entspricht. Es können auch zwei Schwellwerte derart definiert werden, dass bei einer Überschreitung eines ersten, niedrigeren Schwell-wertes eine Warnung ausgegeben wird und bei Überschreiten eines zweiten, höheren Schwellwertes der weitere Betrieb des Streulichtmessgerätes verhindert wird.

Dadurch, dass das Verfahren auf dem Vergleich der Differenzen von jeweils zwei Streulichtsensorsignale beruht, die in zwei verschiedenen Betriebszuständen aufgenommen worden sind, können systematische Fehler, wie z.B. Offset-Fehler der Sensor- und Verstärkeranordnung ausgeschlossen oder zumindest reduziert werden. Dadurch erreicht das Verfahren eine besonders hohe Genauigkeit.

In einer Ausführungsform ist die Lichtquelle im ersten definierten Betriebszustand ausgeschaltet und der Dunkelwert der Streulicht-Messkammer, d. h. das Ausgangssignal des Streulichtsensors, das bei ausgeschalteter Lichtquelle und dunkler Messkammer ausgegeben wird, wird als Streulichtsensorsignal S1 verwendet. In dieser Ausführungsform muss nur ein einziger Referenzgasstrom mit einer definierten Partikelkonzentration bereitgestellt werden. Das Verfahren ist daher besonders einfach und kostengünstig durchzuführen.

In einer alternativen Ausführungsform des erfindungsgemäßen Verfahrens ist die Lichtquelle in beiden definierten Betriebszuständen eingeschaltet und in jedem Betriebszustand wird ein Referenzgasstrom mit einer definierten Partikelkonzentration durch die Streulicht-Messkammer geleitet, wobei sich die Partikelkonzentration im zweiten Betriebszustand von der Partikelkonzentration im ersten Betriebszustand unterscheidet. Durch ein solches Verfahren, bei dem zwei Referenzgasströme mit unterschiedlichen Partikelkonzentrationen miteinander verglichen werden, kann der Verschmutzungsgrad mit besonders hoher Genauigkeit bestimmt werden.

In einer Ausführungsform ist eines der Referenzgase ein so genanntes Nullgas, d.h ein Gas, mit einer besonders niedrigen Partikelkonzentration. Ein solches Nullgas steht häufig als Spülgas und/oder als Gas für den Nullabgleich des Messgerätes zur Verfügung. Das Verfahren kann daher unter Verwendung des vorhandenen Nullgases kostengünstig ohne zusätzlichen Aufwand für die Bereitstellung eines Referenzgases durchgeführt werden.

In einer Ausführungsform wird in wenigstens einem Betriebszustand ein Messkörper, der eingestrahltes Licht in definierter Weise streut, in die Messkammer eingebracht. Der Messkörper ist so ausgestaltet, dass er das Streuverhalten eines Referenzgasstroms mit einer vorgegebenen Partikelkonzentration simuliert. Da ein solcher Messkörper keinem merklichen Alterungsprozess unterliegt und daher ein über lange Zeit konstantes Streuverhalten aufweist, kann durch den Einsatz eines solchen Messkörpers ein definierter Betriebszustand besonders effektiv und einfach mit hoher Genauigkeit und Reproduzierbarkeit wiederholt und dauerhaft eingestellt werden.

In einer Ausführungsform des Verfahrens werden die Schritte zur Bestimmung der Qualität der Messergebnisse regelmäßig in vorgegebenen Zeitabständen durchgeführt. Dadurch wird sichergestellt, dass die Qualität der Messergebnisse des Streulicht-Messgerätes regelmäßig überwacht wird und eine Verschmutzung und/oder Alterung der Bauelemente, welche die Messergebnisse negativ beeinträchtigen könnten, zuverlässig und rechtzeitig erkannt wird.

In einer Ausführungsform werden die Schritte zur Bestimmung der Qualität der Messergebnisse regelmäßig nach einer vorgegebenen Anzahl von Messvorgängen durchgeführt. Dadurch wird die Qualität der Messergebnisse auch bei einer starken Benutzung des Messgerätes, bei der eine Überprüfung in vorgegebenen Zeitabständen nicht ausreichend ist, zuverlässig überwacht. Wird das Messgerät nur selten benutzt, werden durch ein solches Verfahren überflüssige Überprüfungen, die Zeit kosten, in denen das Gerät nicht für Messungen zur Verfügung steht, eingespart.

Die beiden Methoden können auch derart kombiniert werden, dass eine Überprüfung der Qualität der Messergebnisse immer dann stattfindet, wenn eine vorgegebene Anzahl von Messvorgängen durchgeführt worden ist oder wenn eine vorgegebene Zeit seit der letzten Überprüfung vergangen ist, je nachdem welches Kriterium früher erreicht wird. Durch eine solche Kombination kann die Messgenauigkeit des Messgerätes mit geringst möglichen Aufwand unter verschiedensten Betriebsbedingungen des Messgerätes dauerhaft sichergestellt werden.

In einer Ausführungsform des Verfahrens werden die Ergebnisse sämtlicher Überprüfungen dauerhaft gespeichert. So werden die Verschmutzung und Alterung des Messgerätes über die gesamte Lebensdauer protokolliert und können zu Eich-, Überwachungs- und/oder Wartungszwecken ausgewertet werden.

In einer Ausführungsform des Verfahrens werden die Initialisierungsschritte zur Bestimmung des Referenzzustandes unmittelbar nach der Herstellung des Streulichtmessgerätes vorgenommen. In diesem Zustand ist die Messkammer nicht verschmutzt und auch die anderen Bauelemente sind in einem neuwertigen Zustand, so dass der Referenzzustand besonders genau ermittelt werden kann. Auch kann die Initialisierung durch den Hersteller erfolgen, ohne den Anwender damit zu belasten und es wird verhindert, dass unerfahrene Anwender die Initialisierung vergessen oder fehlerhaft durchführen.

Alternativ kann die Initialisierung unmittelbar nach der Aufstellung des Streulichtmessgerätes am Einsatzort vorgenommen werden. Zusätzlich kann die Initialisierung auch nach jeder Reinigung der Streulichtmesskammer und/oder dem Austausch von für die Messgenauigkeit relevanten Bauelementen vorgenommen werden, um jeweils einen aktuellen Referenzwert zu erhalten.

Die Erfindung umfasst auch ein Streulichtmessgerät zur Messung der Partikelkonzentration in Kraftfahrzeugabgasen mit wenigstens einer Speichervorrichtung zur Speicherung der Referenz-Signaldifferenz und einer Steuervorrichtung, welche ausgebildet ist, das Streulichtmessgerät so anzusteuern, dass es ein erfindungsgemäßes Verfahren ausführt.

Die Erfindung wird im Folgenden anhand der beigefügten Figur näher erläutert.

Die Figur zeigt schematisch ein Ausführungsbeispiel einer Streulicht-Messvorrichtung 3 zur Durchführung eines erfindungsgemäßen Verfahrens.

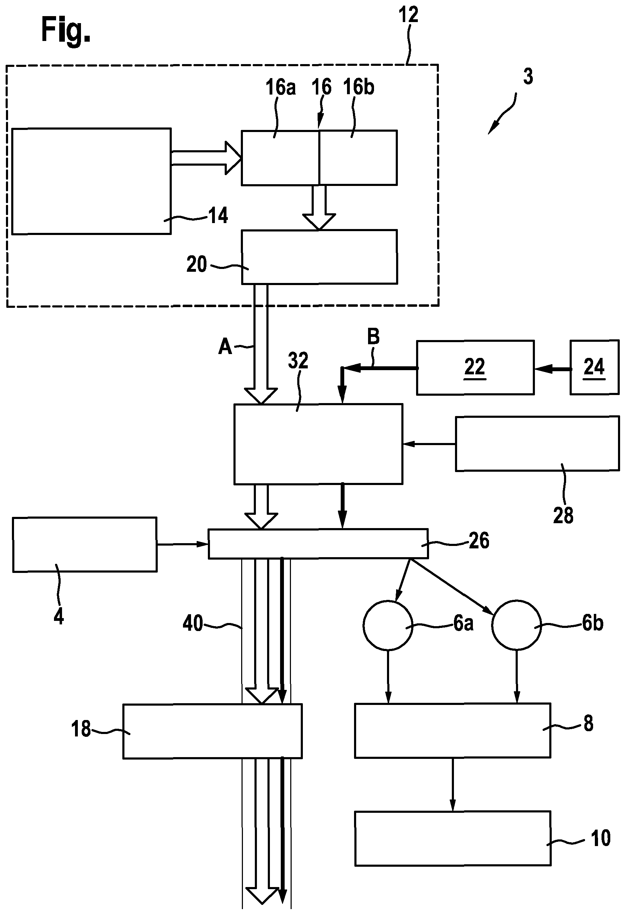

Die in Figur gezeigte Streulicht-Messvorrichtung 3 weist eine Messkammer 26 mit einer Lichtquelle 4 auf, die z. B. als Laser ausgebildet ist und im Betrieb Licht in die Messkammer 26 strahlt. In der Messkammer 26 sind zwei Lichtsensoren 6a, 6b angeordnet. In der schematischen Darstellung der Figur 1 sind die Lichtsensoren 6a, 6b aus Gründen der besseren Übersichtlichkeit außerhalb der Messkammer 26 gezeichnet, obwohl sie in der Realität zumindest teilweise innerhalb oder an der Messkammer 26 angeordnet sind. Die Lichtsensoren 6a, 6b erfassen von der Lichtquelle 4 ausgestrahltes Licht, nachdem es von in der Messkammer 26 vorhandenen Partikeln gestreut worden ist. Die Lichtquelle 4 und die Lichtsensoren 6a, 6b sind so angeordnet, dass kein Licht direkt von der Lichtquelle 4 auf oder in die Lichtsensoren 6a, 6b strahlt. Die Lichtsensoren 6a, 6b sind vorzugsweise derart angeordnet, dass Licht, welches von den Partikeln in verschiedene Winkel gestreut wird, von verschiedenen Lichtsensoren 6a, 6b erfasst wird.

Die Lichtsensoren 6a, 6b sind elektrisch mit einer Auswerteinheit 8 verbunden, welche die von den Lichtsensoren 6a, 6b ausgegeben Signale auswertet und insbesondere aus den von den Lichtsensoren 6a, 6b ausgegeben Signalen die Partikelkonzentration des Kolloids in der Messkammer 26 bestimmt. Die Ergebnisse der Auswertung werden über eine Ausgabevorrichtung 10 ausgegeben. Die Ausgabevorrichtung 10 kann eine Anzeigevorrichtung (Display), einen Drucker und/oder eine Datenschnittstelle, die ausgebildet ist, die Ergebnisse an einen Datenverarbeitungs- oder eine Datenspeichervorrichtung, wie z.B. eine Diskette oder einen USB-Stick, zu übertragen, umfassen.

Die zu messenden Abgase eines schematisch dargestellten Kraftfahrzeugs 24 werden von einer Abgassonde 22, die im oder am Auspuff des Kraftfahrzeugs 24 angeordnet ist, aufgenommen und durch einen Abgasschlauch und ein Schaltelement 32 der Messkammer 26 zugeführt. (Abgasstrom B).

Das Schaltelement 32 ist funktional mit einer Steuereinheit 28 verbunden und zwischen einem geöffneten Zustand, in dem es einen Zustrom von Abgasen aus dem Kraftfahrzeug 24 in die Messkammer 26 erlaubt, und einem geschlossenen Zustand, in dem der Zustrom von Abgasen aus dem Kraftfahrzeug 24 in die Messkammer 26 abgeschaltet ist, umschaltbar. Die Steuereinheit 28 ist bspw. elektrisch oder hydraulisch mit dem Schaltelement 32, das z. B. als Ventil ausgebildet ist, verbunden.

Aus der Messkammer 26 strömen die Abgase über eine Abgasabführvorrichtung 40 nach außen, ohne die unmittelbare Umgebung der Messkammer 26, z. B. die Werkstatt oder den Messplatz, zu verunreinigen oder zu vergiften.

Eine erfindungsgemäße Streulicht-Messvorrichtung 3 weist zusätzlich eine Nullgasquelle 12 auf, die so genanntes Nullgas, d. h., Gas mit einer besonders niedrigen Partikelkonzentration, zur Verfügung stellt. Die Nullgasquelle 12 weist eine Luftzuführung 14 auf, welche Luft aus der Umgebung aufnimmt. Wird die Streulicht-Messvorrichtung 3 in einer besonders verschmutzten und/oder staubhaltigen Umgebung, wie z.B. einer Werkstatt, betrieben, so kann die Luftzuführung 14 als Rohr oder Kamin ausgebildet sein, welche die Umgebungsluft aus einer größeren Entfernung, z. B. von außerhalb des Gebäudes heranführt. Alternativ kann besonders saubere Luft auch aus angelieferten Gasflaschen entnommen werden.

Die Luftzuführung 14 führt die aufgenommene Umgebungsluft einer Filtereinheit 16 zu, welche dazu ausgebildet ist, die Partikelkonzentration in der aufgenommenen Luft zu reduzieren. Dazu weist die Filtereinheit 16 wenigstens einen Feinfilter 16b (z. B. einen sogenannten HEPA-Filter) auf, der in der Lage ist, die zugeführte Luft so zu filtern, dass das Niveau der von den Lichtsensoren 6a, 6b erzeugten Signalstärke, die durch diejenigen Partikel, die auch nach der Filterung noch im Nullgas enthalten sind, verursacht wird, auf einen Wert sinkt, der niedriger als der Wert ist, der bei Partikelkonzentration, wie sie in Abgasen von Fahrzeugen mit einem gut funktionierenden Partikelfilter vorhanden ist, ermittelt wird.

Dem Feinfilter 16b ist ein Grobfilter 16a vorgeschaltet, der besonders grobe Partikel aus der zugeführten Luft heraus filtert, bevor sie in den Feinfilter 16b gelangen. Dadurch wird ein schnelles Verschmutzen und/oder Verstopfen des Feinfilters 16b durch grobe Partikel verhindert und die Wartungsintervalle zum Auswechseln bzw. Reinigen der Filter 16a, 16b können verlängert werden. Der Grobfilter 16a und der Feinfilter 16b können dem jeweiligen Verschmutzungsgrad entsprechend separat ausgewechselt bzw. gereinigt werden, um die Wartungskosten zu reduzieren.

Stromabwärts der Messkammer 26 ist ein Pumpe 18 zur Förderung des Nullgases vorgesehen. Die Pumpe 18 fördert das Nullgas aus der Nullgasquelle 12 durch Ansaugen des Nullgases durch die Messkammer 26. Gleichzeitig unterstützt die Pumpe 18, wenn sie auch während des Messvorgangs betrieben wird, den Abgasstrom B aus dem Kraftfahrzeug 24 durch die Messkammer 26.

In einem alternativen, nicht gezeigten Ausführungsbeispiel ist die Pumpe 18 stromaufwärts der Messkammer 26 im Nullgasstrom A und/oder im Abgasstrom B angeordnet.

Im Verlauf der Nullgasströmung zwischen der Luftzuführung 14 und der Messkammer 26 ist ein Drucksensor 20 vorgesehen, der den Druck des zugeführten Nullgases misst und das Ergebnis an eine in der Figur 1 nicht gezeigte Steuereinheit weiter gibt. Der von dem Drucksensor 20 gemessene Druck kann zur Regelung der Pumpe 18 verwendet werden, um stets eine ausreichende Nullgasströmung durch die Messkammer 26 sicherzustellen.

Bei bekannter Leistung der Pumpe 18 kann aus dem Druck des Nullgases auf die Verschmutzung der Filtereinheit 16 geschlossen werden, da über eine stark verschmutze Filtereinheit 16 ein großer Druckabfall auftritt. Überschreitet der Druckabfall über die Filtereinheit 16 einen vorgegebenen Grenzwert, so kann ein Warnsignal ausgegeben werden, welches den Benutzer darauf hinweist, dass wenigstens einer der Filter 16a, 16b der Filtereinheit 16 auszuwechseln ist. Auch kann die Pumpe 18 bei Überschreiten eines zweiten, höheren Grenzwertes abgeschaltet werden, wenn die Verschmutzung des Filters so stark ist, dass eine sichere Funktion der Nullgasquelle 12 nicht mehr gewährleistet ist oder die Gefahr besteht, dass die Pumpe 18 überlastet und/oder beschädigt wird.

Alternativ oder zusätzlich kann ein Drucksensor 20 stromaufwärts der Filtereinheit 16 angeordnet sein um den Druck des Nullgases vor der Filtereinheit 16 zu messen.

In einem Referenzzustand der Streulicht-Messvorrichtung 3, z.B. unmittelbar nach dessen Herstellung oder Auslieferung wird eine Referenz-Signaldifferenz R ermittelt.

Vor dem eigentlichen Messvorgang wird ein so genannter Nullabgleich durchgeführt.

Die Pumpe 18 der Nullgasquelle 12 ist eingeschaltet, so dass durch die Filtereinheit 16 gefiltertes Nullgas aus der Nullgasquelle 12 in die Messkammer 26 strömt.

Die Lichtquelle 4 wird eingeschaltet und die von den Lichtsensoren 6a, 6b ausgegebenen Signale, die auf Streulicht beruhen, das von Partikeln, die in dem in die Messkammer 26 geführten Nullgas vorhanden sind, gestreut und von den Lichtsensoren 6a, 6b detektiert worden ist, werden ausgewertet um den Nullzustand der Streulicht-Messvorrichtung 3 zu definieren.

Nachdem der Nullabgleich durchgeführt worden ist, steuert die Steuereinheit 28 das Schaltelement 32 so an, dass die Zufuhr von Abgasen von dem Kraftfahrzeug 24 in die Messkammer 26 geöffnet wird und Abgase aus dem Kraftfahrzeug 24 durch die Messkammer 26 strömen (Abgasstrom B), so dass die Partikelkonzentration in den durch die Messkammer strömenden Abgasen gemessen werden kann.

In dem in der Figur gezeigten Ausführungsbeispiel wird die Nullgasströmung A während der Messung der Partikelkonzentration in den Abgasen des Kraftfahrzeugs 24 nicht abgeschaltet. Das Nullgas aus der Nullgasquelle 12 strömt vielmehr gleichzeitig mit den zu messenden Abgasen durch die Messkammer 26. Dabei wird das Nullgas beispielsweise als Spülgas unmittelbar vor den Sensoren 6a, 6b und/oder der Lichtaustrittsöffnung der Lichtquelle 4 entlang geführt, um ein Verschmutzen der Sensoren 6a, 6b bzw. der Lichtaustrittsöffnung durch die Ablagerung von Partikeln aus dem Abgasstrom B zu verhindern oder wenigstens zu minimieren.

In einem alternativen, nicht gezeigten Ausführungsbeispiel wird die Nullgasströmung A während der Messung abgeschaltet, um eine Verdünnung des Abgasstromes B durch Nullgas zu vermeiden.

## Patentansprüche

1. Verfahren zur Bestimmung der Qualität der Messergebnisse eines Streulichtmessgerätes (3), das zur Messung einer Partikelkonzentration in Kraftfahrzeugabgasen vorgesehen ist und wenigstens eine Streulicht-Messkammer (26), wenigstens eine Lichtquelle (4) und wenigstens einen Lichtsensor (6a, 6b) aufweist, wobei das Verfahren die folgenden Schritte aufweist:
A) in einem Referenzzustand des Streulichtmessgerätes:
A1) Messen und Speichern eines ersten Streulichtsensorsignals (S1) in einem ersten definierten Betriebszustand des Streulichtmessgerätes;
A2) Messen und Speichern eines zweiten Streulichtsensorsignals (S2) in einem zweiten definierten Betriebszustand des Streulichtmessgerätes;
A3) Ermitteln und Speichern einer Referenz-Signaldifferenz (R) zwischen dem zweiten Streulichtsensorsignal (S2) und dem ersten Streulichtsensorsignal (S1);
B) in einem gebrauchten Zustand des Streulichtmessgerätes:
B1) Messen und Speichern eines ersten Streulichtsensorsignals (M1) im ersten definierten Betriebszustand des Streulichtmessgerätes;
B2) Messen und Speichern eines zweiten Streulichtsensorsignals (M2) im zweiten definierten Betriebszustand des Streulichtmessgerätes;
B3) Ermitteln und Speichern einer Signaldifferenz (D) zwischen dem zweiten Streulichtsensorsignal (M2) und dem ersten Streulichtsensorsignal (M1);
C) Vergleichen der Signaldifferenz (D) im gebrauchten Zustand mit der im Referenzustand aufgenommenen Referenz-Signaldifferenz R.

2. Verfahren nach Anspruch 1 wobei die Lichtquelle (4) im ersten definierten Betriebszustand ausgeschaltet ist.

3. Verfahren nach Anspruch 1 oder 2, wobei in wenigstens einem Betriebszustand ein Messkörper mit einem definierten Streuverhalten in die Streulicht-Messkammer (26) eingebracht ist.

4. Verfahren nach einem der vorangehenden Ansprüche, wobei in wenigstens einem Betriebszustand die Lichtquelle (4) eingeschaltet ist und ein Referenzgasstrom mit einer definierten Partikelkonzentration durch die Streulicht-Messkammer (26) geleitet wird.

5. Verfahren nach Anspruch 4, wobei ein Referenzgas ein Nullgas mit einer besonders niedrigen Partikelkonzentration ist.

6. Verfahren nach einem der vorangehenden Ansprüche, wobei die in einem gebrauchten Zustand des Streulichtmessgerätes durchzuführenden Schritte B1 bis B3 und C regelmäßig in vorgegebenen Zeitabständen und/oder nach einer vorgegebenen Anzahl von Messvorgängen durchgeführt werden.

7. Verfahren nach einem der vorangehenden Ansprüche, wobei die Schritte A1 bis A3 zur Ermittlung der Referenz-Signaldifferenz R unmittelbar nach der Herstellung des Streulichtmessgerätes vorgenommen werden.

8. Verfahren nach einem der Ansprüche 1 bis 7, wobei die Schritte A1 bis A3 zur Ermittlung der Referenz-Signaldifferenz R unmittelbar nach der Aufstellung des Streulichtmessgerätes am Einsatzort vorgenommen werden.

9. Verfahren nach einem der vorangehenden Ansprüche, wobei die Schritte A1 bis A3 zur Ermittlung der Referenz-Signaldifferenz R nach einer Reinigung der Streulicht-Messkammer (26) vorgenommen werden.

10. Streulichtmessgerät zur Messung der Partikelkonzentration in Kraftfahrzeugabgasen mit wenigstens einer Speichervorrichtung zur Speicherung einer Referenz-Signaldifferenz und einer Steuervorrichtung, die zur Durchführung eines Verfahrens nach einem der vorangehenden Ansprüche eingerichtet ist.

## Claims

1. Method for determining the quality of the measurement results of a stray light meter (3) provided for measuring a particle concentration in motor vehicle exhaust gases and comprising at least one stray light measuring chamber (26), at least one light source (4) and at least one light sensor (6a, 6b), wherein the method comprises the following steps:
A) in a reference state of the stray light meter:
A1) measuring and storing a first stray light sensor signal (S1) in a first defined operating state of the stray light meter;
A2) measuring and storing a second stray light sensor signal (S2) in a second defined operating state of the stray light meter;
A3) ascertaining and storing a reference signal difference (R) between the second stray light sensor signal (S2) and the first stray light sensor signal (S1);
B) in a used state of the stray light meter:
B1) measuring and storing a first stray light sensor signal (M1) in the first defined operating state of the stray light meter;
B2) measuring and storing a second stray light sensor signal (M2) in the second defined operating state of the stray light meter;
B3) ascertaining and storing a signal difference (D) between the second stray light sensor signal (M2) and the first stray light sensor signal (M1);
C) comparing the signal difference (D) in the used state to the reference signal difference R recorded in the reference state.

2. Method according to Claim 1, wherein the light source (4) is switched off in the first defined operating state.

3. Method according to Claim 1 or 2, wherein a measurement body with a defined scattering behaviour is introduced into the stray light measuring chamber (26) in at least one operating state.

4. Method according to one of the preceding claims, wherein the light source (4) is switched on in at least one operating state and a reference gas flow with a defined particle concentration is guided through the stray light measuring chamber (26).

5. Method according to Claim 4, wherein a reference gas is a zero gas with a particularly low particle concentration.

6. Method according to one of the preceding claims, wherein the steps B1 to B3 and C, which are to be performed in a used state of the stray light meter, are performed regularly at predetermined time intervals and/or after a predetermined number of measuring processes.

7. Method according to one of the preceding claims, wherein steps A1 to A3 for ascertaining the reference signal difference R are undertaken immediately after the production of the stray light meter.

8. Method according to one of Claims 1 to 7, wherein steps A1 to A3 for ascertaining the reference signal difference R are undertaken immediately after setting up the stray light meter at the point of use.

9. Method according to one of the preceding claims, wherein steps A1 to A3 for ascertaining the reference signal difference R are undertaken after cleaning the stray light measuring chamber (26).

10. Stray light meter for measuring the particle concentration in motor vehicle exhaust gases, comprising at least one memory apparatus for storing a reference signal difference and a control apparatus configured to carry out a method according to one of the preceding claims.

## Revendications

1. Procédé pour déterminer la qualité des résultats de mesure d'un appareil de mesure de lumière diffusée (3) servant à mesurer la concentration en particules dans les gaz d'échappement de véhicules automobiles et comprenant au moins une chambre de mesure de lumière diffusée (26), au moins une source lumineuse (4) et au moins un capteur de lumière (6a, 6b), dans lequel le procédé comprend les étapes consistant à :
A) dans un état de référence de l'appareil de mesure de lumière diffusée :
A1) mesurer et stocker un premier signal de capteur de lumière diffusée (S1) dans un premier état de fonctionnement défini de l'appareil de mesure de lumière diffusée ;
A2) mesurer et stocker un deuxième signal de capteur de lumière diffusée (S2) dans un deuxième état de fonctionnement défini de l'appareil de mesure de lumière diffusée ;
A3) déterminer et stocker une différence de signal de référence (R) entre le deuxième signal de capteur de lumière diffusée (S2) et le premier signal de capteur de lumière diffusée (S1) ;
B) dans un état utilisé de l'appareil de mesure de lumière diffusée :
B1) mesurer et stocker un premier signal de capteur de lumière diffusée (M1) dans le premier état de fonctionnement défini de l'appareil de mesure de lumière diffusée ;
B2) mesurer et stocker un deuxième signal de capteur de lumière diffusée (M2) dans le deuxième état de fonctionnement défini de l'appareil de mesure de lumière diffusée ;
B3) déterminer et stocker une différence de signal (D) entre le deuxième signal de capteur de lumière diffusée (M2) et le premier signal de capteur de lumière diffusée (M1) ;
C) comparer la différence de signal (D) à l'état utilisé à la différence de signal de référence R acquise dans l'état de référence.

2. Procédé selon la revendication 1, dans lequel la source lumineuse (4) est désactivée dans le premier état de fonctionnement défini.

3. Procédé selon la revendication 1 ou 2, dans lequel, dans au moins un état de fonctionnement, un corps de mesure ayant un comportement de diffusion défini est introduit dans la chambre de mesure de lumière diffusée (26).

4. Procédé selon l'une quelconque des revendications précédentes, dans lequel, dans au moins un état de fonctionnement, la source lumineuse (4) est activée et un flux de gaz de référence ayant une concentration définie en particules est amené à passer à travers la chambre de mesure de lumière diffusée (26).

5. Procédé selon la revendication 4, dans lequel un gaz de référence est un gaz de mise à zéro ayant une concentration en particules particulièrement faible.

6. Procédé selon l'une quelconque des revendications précédentes, dans lequel les étapes B1 à B3 et C devant être effectuées dans un état utilisé de l'appareil de mesure de lumière diffusée sont effectuées régulièrement à des intervalles de temps prédéfinis et/ou après un nombre prédéfini de processus de mesure.

7. Procédé selon l'une quelconque des revendications précédentes, dans lequel les étapes A1 à A3 destinées à déterminer la différence de signal de référence R sont réalisées immédiatement après la fabrication de l'appareil de mesure de lumière diffusée.

8. Procédé selon l'une quelconque des revendications 1 à 7, dans lequel les étapes A1 à A3 destinées à déterminer la différence de signal de référence R sont réalisées immédiatement après l'installation de l'appareil de mesure de lumière diffusée sur un site d'utilisation.

9. Procédé selon l'une quelconque des revendications précédentes, dans lequel les étapes A1 à A3 destinées à déterminer la différence de signal de référence R sont réalisées après un nettoyage de la chambre de mesure de lumière diffusée (26).

10. Appareil de mesure de lumière diffusée destiné à mesurer la concentration en particules dans des gaz d'échappement de véhicules automobiles, comportant au moins un dispositif de stockage destiné à stocker une différence de signal de référence et un dispositif de commande qui est conçu pour mettre en oeuvre un procédé selon l'une quelconque des revendications précédentes.
